# EUROPÄISCHE PATENTSCHRIFT

(11) **EP 0 907 309 B1**
(45) Veröffentlichungstag und Bekanntmachung des Hinweises auf die Patenterteilung: **01.09.2004**
(21) Anmeldenummer: 98118606.7
(22) Anmeldetag: 01.10.1998
(51) Int. Cl.: H05K 7/14, H02B 1/048

(54) **Gehäuse mit Einrastmitteln an einer Montagegrundfläche und Verfahren zur Montage**
Housing with snap-in means for mounting on a plate and mounting method
Boîtier pourvu de moyens d'encliquetage sur une surface de montage et méthode de montage

(30) Priorität: 04.10.1997 DE 19743949
(43) Veröffentlichungstag der Anmeldung: 07.04.1999
(73) Patentinhaber: Conti Temic Microelectronic GmbH, 90411 Nürnberg (DE)
(72) Erfinder: Fendt, Günter, 86529 Schrobenhausen (DE); Baur, Richard, 85276 Pfaffenhofen (DE); Wörle, Engelbert, 86556 Kühbach (DE)

(56) Entgegenhaltungen:
- EP-A- 0 624 925
- EP-A- 0 715 382
- DE-A- 3 426 949
- FR-A- 2 546 676

## Beschreibung

Die Erfindung betrifft ein Gehäuse mit einer Montagegrundfläche gemäß dem Oberbegriff des Patentanspruchs 1 sowie ein Verfahren zur Montage gemäß dem Oberbegriff des Patentanspruchs 4.

Gehäuse mit Einrastmitteln gehören zum Stand der Technik und sind bspw. aus der US 5,220,712 oder der DE 34 26 949 bekannt. Das Einrasten, - schnappen oder -klinken zweier zugeordneter Einrastmittel vereinfacht die Montage gegenüber herkömmlichen Befestigungsformen bspw. Schrauben. Ein Einrastvorgang ist deutlich schneller durchführbar und selbstjustierend.

Da jedoch im Automobilbau besonders hohe Sicherheitsanforderungen gestellt werden muß das erfolgte Einrasten zwischen Gehäuse und Trägerkörper nachgeprüft werden können.

Aufgabe der Erfindung ist es daher, ein Gehäuse sowie ein verfahren zur Montage anzugeben, durch welches in einfacher Weise geprüft werden kann, ob das Gehäuse am Trägerkörper montiert ist.

Die Erfindung wird für das Gehäuse durch die kennzeichnenden Merkmale des Patentanspruchs 1 und für das verfahren zur Montage durch die kennzeichnenden Ansprüche des Patentanspruchs 4 gelöst.

Zwischen der Montagegrundfläche des Gehäuses und dem Trägerkörper steht ein rückstellbar gelagertes Teil hervor, welches bei der Montage des Gehäuses mit der Montagegrundfläche am Trägerkörper mittels der Einrastmittel zurückgestellt wird. Außerdem ist eine Meßanordnung vorgesehen, mit der bestimmt wird, ob sich das rückstellbar gelagerte Teil in der rückgestellten oder in der hervorstehenden Position befindet. vorteilhafte Weiterbildung der Erfindung beschreiben die Unteransprüche 2 und 3 für das Gehäuse sowie Unteranspruch 5 für das Verfahren zur Montage gemäß Patentanspruch 4. so wird gemäß Patentanspruch 2 das rückstellbar gelagerte Teil vorzugsweise mit einem elektrischen Schaltelement verbunden, welches bei der hervorstehenden Position des rückstellbar gelagerten Teils einen ersten Schaltzustand aufweist, während es bei der rückgestellten Position des rückstellbar gelagerten Teils einen zweiten elektrischen Schaltzustand aufweist und der jeweilige Schaltzustand von der Meßanordnung erfaßt wird.

Gemäß Patenanspruch 3 wird am rückstellbar gelagerten Teil ein Sensierobjekt befestigt und im Gehäuse als Meßanordnung einen den Abstand des Sensierobjektes und damit die Position des rückstellbar gelagerten Teils erfassenden Sensoreinrichtung vorgesehen. Eine solche Sensoreinrichtung kann bspw. ein Hall-Sensor sein. Sensoreinrichtungen arbeiten berührungslos und im allgemeinen verschleißfrei.

Gemäß dem Verfahren zur Montage nach Patentanspruch 4 wird das Gehäuse mit dem ersten Einrastmittel an der Montagegrundfläche mit dem zweiten Mittel am Trägerkörper durch Einrasten verbunden, wobei das rückstellbar gelagerte Teil dabei in die rückgestellte Position gedrückt wird. Es ist eine Meßanordnung vorgesehen, mit der bestimmt wird, ob das rückstellbar gelagerte Teil in der hervorstehenden oder in der rückgestellten Position ist und daraus das erfolgte Einrasten überprüft wird.

Vorzugsweise wird gemäß Anspruch 5 die Meßanordnung kalibriert, indem bereits vor dem Einrasten wenigstens ein erster Meßwert der Position von der Meßanordnung erfaßt wird, diesem Meßwert die hervorstehende Position zugeordnet wird und der Meßwert als Referenzwert abgelegt wird, mit dem ein weiterer Meßwert nach dem erfolgten Einrasten dann verglichen wird. Denkbar ist ferner, daß auch ein Meßwert für die zurückgestellte Position nach dem Einbau als Vergleichswert abgelegt wird, indem der eingebaute Zustand simuliert wird, bspw. durch ein anderes Sensierobjekt oder das Verstellen des rückstellbar gelagerten Teils. Auch die Verwendung der Kombination aus beiden variancen ist denkbar.

Die Erfindung wird nachfolgend anhand eines Ausführungsbeispiels bezugnehmend auf die Figuren näher erläutert.

Kurze Beschreibung der Figuren:
- Figur 1: Gehäuse und Trägerkörper mit Einrastmitteln und einem hervorstehenden rückstellbar gelagerten Teil an der Montagegrundfläche des Gehäuses vor dem Einrasten,
- Figur 2: Gehäuse während des Einrastens,
- Figur 3: Gehäuse nach dem Einrasten in den Trägerkörper, rückstellbar gelagertes Teil in rückgestellter Position.

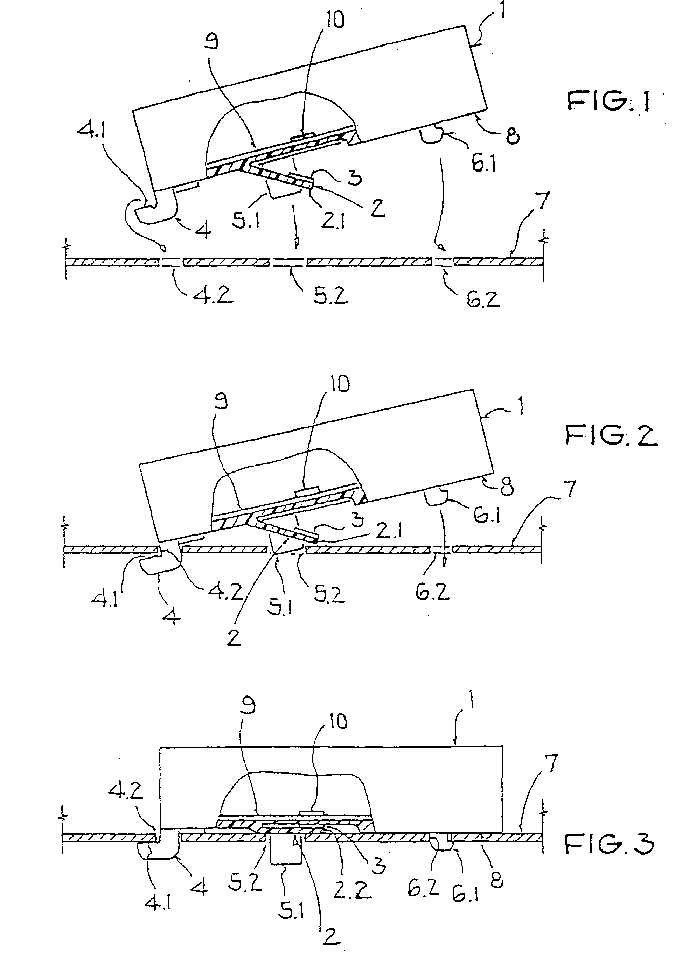

Figur 1 zeigt das Gehäuse 1, welches an der Montagegrundfläche 8 Einrastmittel 4.1, 5.1 und 6.1, dargestellt als Einrasthaken, aufweist. Diesen Einrastmitteln sind jeweils entsprechend Einrastmitteln am Trägerkörper 7, hier dargestellt als Einrastöffnungen, 4.2, 5.2 und 6.2 zugeordnet. Naheliegender Weise können die Einrastöffnungen auch am Gehäuse 1 und die Einrasthaken am Trägerkörper angeordnet sein oder eine Kombination aus beidem gewählt werden, sofern mehr als ein Einrastmittelpaar verwendet wird.

In diesem Ausführungsbeispiel ist das rückstellbar gelagerte Teil 2 in der hervorstehenden Position (2.1) als aus der Montagefläche 8 abgespreizte winklige Anordnung dargestellt, die mit der an der Leiterplatte 9 elastisch verbunden ist. Grundsätzlich kann das rückstellbar gelagerte Teil 2 auch an den Trägerkörper 7 montiert sein. Die Figur 1 zeigt dabei das rückstellbar gelagerte Teil 2 in der hervorstehenden Position (2.1) vor der Montage. Am hervorstehenden Teil des rückstellbar gelagerten Teils 2 befindet sich das Sensierobjekt 3 und weist einen für die hervorstehende Position (2.1) typischen Abstand zur Meßanordnung 10 auf, die in die Leiterplatte 9 integriert ist. Vorzugsweise erfaßt die Meßanordnung 10 bereits vor der Montage einen ersten Meßwert der Position und ordnet diesem Meßwert die hervorstehende Position (2.1) zu. Diese wird als Referenzwert abgelegt und mit einem zweiten Meßwert nach dem erfolgten Einrasten verglichen, wodurch das Einrasten nachgeprüft werden kann.

Figur 2 zeigt, wie das Gehäuse 1 zunächst mit den Einrastmitteln 4 im Trägerkörper 7 an einer Steile eingerastet und nachfolgend mittels der Einrastmittel 5.1 und 5.2 justiert wird. Das rückstellbar gelagerte Teil 2.1 befindet sich dabei noch in der aus der Montagegrundfläche 8 hervorstehenden Position 2.1. Nachfolgend wird das Gehäuse 1 in Richtung des Trägerkörpers 7 gedrückt, wobei die Einrastmittel 6.1 und 6.2 zur Einrastverbindung 6 (vergleiche Figur 3) einrasten. Wie ebenfalls in Figur 3 zu erkennen, gelangt dadurch das rückstellbar gelagerte Teil 2 in die rückgestellte Position 2.2. Die Meßanordnung 10 weist nunmehr einen deutlich geringeren Abstand zu dem am rückstellbar gelagerten Teil 2 befindlichen Sensierobjekt 3 auf. Die Meßanordnung 10 bestimmt in einem zweiten Meßwert wieder den Abstand zwischen Meßanordnung 10 und Sensierobjekt 3 und vergleicht diesen zweiten Meßwert mit dem als Referenzwert abgelegten ersten Meßwert und gibt ein entsprechendes Ausgangssignal an die Montageüberwachung. Durch Ermittlung eines Referenzwertes für den eingebauten Zustand kann dies noch ergänzt werden.

Für eine spiegelsymetrische Anordnung des rückstellbar gelagerten Teils 2 am Trägerkörper 7 ergibt sich die Wirkungsweise analog. Bei Verwendung mikromechanischer Schalter vereinfacht sich die Meßanordnung 10 auf eine reine Leitfähigkeitsprüfung.

## Patentansprüche

1. Gehäuse (1) mit einer Montagegrundfläche (8), an der sich zumindest ein erstes Einrastmittel (4.1, 5.1, 6.1) befindet, dem ein zweites Einrastmittel (4.2, 5.2, 6.2) an einem Trägerkörper (7) zugeordnet ist und die durch Einrasten eine mechanische Verbindung (4,5,6) bewirken, **dadurch gekennzeichnet, daß**
a) an der Montagegrundfläche (8) zum Trägerkörper (7) hin oder
b) am Trägerkörper (7) zur Montagefläche (8) hin,
ein beim Einrasten zwischen einer hervorstehenden (2.1) und einer rückgestellten Position (2.2) rückstellbar gelagertes Teil (2) hervorsteht und eine Meßanordnung (10) vorgesehen ist, mit der bestimmt wird, ob das rückstellbar gelagerte Teil (2) in der hervorstehenden (2.1) oder in der rückgestellten Position (2.2) ist.

2. Gehäuse nach Anspruch 1, **dadurch gekennzeichnet, daß** das rückstellbar gelagerte Teil (2) mit einem elektrischen Schaltelement verbunden ist, welches bei der hervorstehenden Position (2.1) des rückstellbar gelagerten Teils (2) einen ersten elektrischen Schaltzustand aufweist, während es bei der rückgestellten Position (2.2) des rückstellbar gelagerten Teils (2) einen zweiten elektrischen Schaltzustand aufweist und der Schaltzustand von der Meßanordnung (10) jeweils erfaßt wird.

3. Gehäuse nach Anspruch 1, **dadurch gekennzeichnet, daß** am rückstellbar gelagerten Teil (2) ein Sensierobjekt (3) befestigt und im Gehäuse (1) als Meßanordnung (10) eine den Abstand des Sensierobjektes (3) und damit die Position (2.1 oder 2.2) des rückstellbar gelagerten Teils (2) erfassende Sensoreinrichtung vorgesehen ist.

4. Verfahren zur Montage eines Gehäuse mit einer Montagegrundfläche, an der sich zumindest ein erstes Einrastmittel befindet, dem ein zweites Einrastmittel an einem Trägerkörper zugeordnet ist und die durch Einrasten eine mechanische Verbindung bewirken, **dadurch gekennzeichnet, daß** ein vor dem Einrasten hervorstehendes rückstellbar gelagertes Teil (2)
a) an der Montagegrundfläche (8) zum Trägerkörper (7) hin oder
b) am Trägerkörper (7) zur Montagefläche (8) hin,
und eine Meßanordnung (10) vorgesehen sind, mit der bestimmt wird, ob das rückstellbar gelagerte Teil (2) in der hervorstehenden (2.1) oder in der rückgestellten Position (2.2) ist,
das Gehäuse (1) mit dem ersten Einrastmittel (4.1, 5.1, 6.1) an der Montagegrundfläche (8) mit dem zweiten Einrastmittel (4.2, 5.2, 6.2) am Trägerkörper (7) durch Einrasten verbunden wird, wobei das rückstellbar gelagertes Teil (2) dabei in die rückgestellte Position (2.2) gedrückt wird und
daraus mittels die Meßanordnung (10) nachfolgend das erfolgte Einrasten überprüft wird.

5. Verfahren nach Anspruch 4, **dadurch gekennzeichnet, daß** die Meßanordnung (10) zur Kalibrierung bereits vor dem Einrasten wenigstens einen ersten Meßwert der Position erfaßt, diesem die hervorstehende Position (2.1) zuordnet und diesen als Referenzwert ablegt, mit dem ein weiterer Meßwert nach dem erfolgten Einrasten verglichen wird.

## Claims

1. A housing (1) incorporating a mounting surface (8) on which there is at least one first latching means (4.1, 5.1, 6.1) that is associated with a second latching means (4.2, 5.2, 6.2) on a carrier body (7), said latching means producing a mechanical connection (4, 5, 6) by a latching process, **characterized in that**
a part (2) which is mounted such as to be resettable between a projecting (2.1) and a reset position (2.2) during the latching process is provided
a) on the mounting surface (8) and projects towards the carrier body (7) or
b) on the carrier body (7) and projects towards the mounting surface (8),
and **in that** there is provided a measuring arrangement (10) for determining whether the resettably mounted part (2) is in the projecting (2.1) or in the reset position (2.2).

2. A housing in accordance with Claim 1, **characterized in that** the resettably mounted part (2) is connected to an electrical circuit element which has a first electrical switching state in the projecting position (2.1) of the resettably mounted part (2), whilst it has a second electrical switching state in the reset position (2.2) of the resettably mounted part (2), and the switching state is detected in each case by the measuring arrangement (10).

3. A housing in accordance with Claim 1, **characterized in that** a sensed object (3) is attached to the resettably mounted part (2) and **in that** a measuring arrangement (10) is provided in the housing (1) in the form of a sensor device for detecting the distance of the sensed object (3) and hence the position (2.1 or 2.2) of the resettably mounted part (2).

4. A method of mounting a housing incorporating a mounting surface on which there is at least one first latching means that is associated with a second latching means on a carrier body, said latching means producing a mechanical connection by a latching process, **characterized in that**, prior to the latching process, a part (2)
a) on the mounting surface (8) projects towards the carrier body (7) or
b) on the carrier body (7) projects towards the mounting surface (8),
**in that** there is provided a measuring arrangement (10) which determines whether the resettably mounted part (2) is in the projecting (2.1) or in the reset position (2.2),
**in that** the housing (1) is connected by the first latching means (4.1, 5.1, 6.1) on the mounting surface (8) to the second latching means (4.2, 5.2, 6.2) on the carrier body (7) by a latching process, whereby the resettably mounted part (2) is thereby pressed into the reset position (2.2) and
based thereupon, the effected latching action is checked by means of the measuring arrangement (10).

5. A method in accordance with Claim 4, **characterized in that** the measuring arrangement (10) detects at least one first measured value of the position prior to the latching process for calibration purposes, assigns said first measured value to the projecting position (2.1) and stores it as a reference value with which a further measured value is compared after the latching process has occurred.

## Revendications

1. Boîtier (1) avec une surface de base de montage (8) sur laquelle se trouve au moins un premier moyen d'enclenchement (4.1, 5.1, 6.1) auquel est associé un deuxième moyen d'enclenchement (4.2, 5.2, 6.2) sur un corps porteur (7), et qui accomplissent par enclenchement une liaison mécanique (4, 5, 6), **caractérisé en ce qu'**il est prévu une pièce logée avec faculté de recul (2) lors de l'enclenchement entre une position en saillie (2.1) et une position en retrait (2.2), qui dépasse
a) soit sur la surface de base de montage (8) en direction du corps porteur (7)
b) soit sur le corps porteur (7) en direction de la surface de montage (8),
et il est prévu un agencement de mesure (10) avec lequel on détermine si la pièce logée avec faculté de recul (2) est dans la position en saillie (2.1) ou dans la position en retrait (2.2).

2. Boîtier selon la revendication 1 **caractérisé en ce que** la pièce logée avec faculté de recul (2) est reliée à un élément de commutation électrique lequel présente un premier état de commutation électrique dans la position en saillie (2.1) de la pièce logée avec faculté de recul (2), alors qu'il présente un deuxième état de commutation électrique dans la position en retrait (2.2) de la pièce logée avec faculté de recul (2) et l'état de commutation est respectivement saisi par l'agencement de mesure (10).

3. Boîtier selon la revendication 1, **caractérisé en ce qu'**un objet détecteur (3) est fixé sur la pièce logée avec faculté de recul (2) et un dispositif de détection saisissant la distance de l'objet détecteur (3) et ainsi la position (2.1 ou 2.2) de la pièce logée avec faculté de recul (2) est prévu dans le boîtier (1) comme dispositif de mesure.

4. Procédé pour le montage d'un boîtier avec une surface de base de montage sur laquelle se trouve au moins un premier moyen d'enclenchement auquel est associé un deuxième moyen d'enclenchement sur un corps porteur et qui accomplissent par enclenchement une liaison mécanique, **caractérisé en ce qu'**il est prévu avant l'enclenchement une pièce logée avec faculté de recul (2)
a) soit sur la surface de base de montage (8) en direction du corps porteur (7)
b) soit sur le corps porteur (7) en direction de la surface de base (8),
et il est prévu un agencement de mesure (10) avec lequel on détermine si la pièce logée avec faculté de recul (2) est dans la position en saillie (2.1) ou dans la position en retrait (2.2),
le boîtier (1) avec le premier moyen d'enclenchement (4.1, 5.1, 6.1) sur la surface de base de montage (8) est relié par enclenchement au deuxième moyen d'enclenchement (4.2, 5.2, 6.2) sur le corps porteur (7), la pièce logée avec faculté de recul (2) étant alors poussée dans la position en retrait (2.2) et
de là, l'enclenchement effectué est ensuite contrôlé au moyen de l'agencement de mesure.

5. Procédé selon la revendication 4 **caractérisé en ce que**, pour le calibrage, l'agencement de mesure (10) saisit déjà avant l'enclenchement au moins une première valeur de mesure de la position, associe la position en saillie (2.1) à cette valeur et la mémorise à titre de valeur de référence avec laquelle on compare une autre valeur de mesure une fois l'enclenchement effectué.
